# EUROPEAN PATENT APPLICATION

(11) **EP 4 722 772 A1**
(43) Date of publication of application: **08.04.2026**
(21) Application number: 24847589.9
(22) Date of filing: 19.03.2024
(51) Int. Cl.: G02B 6/124, G02B 27/01

(54) **OPTICAL DISPLAY MODULE AND HEAD-MOUNTED DEVICE**

(30) Priority: 28.07.2023 CN 202310938831
(71) Applicant: Meta-Bounds Inc., Zhuhai, Guangdong 519000 (CN)
(72) Inventor: GUAN, Jian, Zhuhai, Guangdong 519000 (CN); ZHAO, Jin, Zhuhai, Guangdong 519000 (CN); WANG, Rui, Zhuhai, Guangdong 519000 (CN); ZHOU, Xing, Zhuhai, Guangdong 519000 (CN)
(74) Representative: Santarelli
(86) International application number: PCT/CN2024/082448
(87) International publication number: WO 2025/025623

(57) **Abstract**

Provided in the present disclosure are an optical display module and a head-mounted device. The optical display module comprises an optical engine, a diffractive waveguide layer, a sealing member and a reflecting film, wherein the optical engine and the diffractive waveguide layer are opposite each other and have a gap therebetween; the sealing member is arranged between the optical engine and the diffractive waveguide layer and connected to both the optical engine and the diffractive waveguide layer; and the reflecting film is arranged on the diffractive waveguide layer, and at least part of the reflecting film is located between the sealing member and a total-reflection propagation region of the diffractive waveguide layer, thus separating the sealing member from the total-reflection propagation region. By means of the reflecting film, the sealing member is prevented from coming into direct contact with the total-reflection propagation region of the diffractive waveguide layer, thereby ensuring light guide efficiency; moreover, providing an internal protection layer on the diffractive waveguide layer is unnecessary, enabling the thickness and weight to be reduced.

## Description

### Technical Field

The present disclosure belongs to the technical field of augmented reality, and in particular, relates to an optical display module and a head-mounted device.

### Background of the Invention

An optical module of an augmented reality (AR) near-eye display device is usually composed of two parts: an optical engine (or called a light engine) and an optical combiner. The optical engine consists of an image source and a projection lens, and the image source is used to generate an image to be displayed, and the projection lens projects the image displayed by the image source to infinity or to a specified distance. The optical combiner can directionally transmit the signal light emitted by the optical engine to eyes of human to form an image to be displayed on the retina. At the same time, the optical combiner exhibits good transmittance for the ambient light in the real world, and through the optical combiner, eyes of human can see the real-world scenery and the image projected by the optical engine simultaneously. A diffractive optical waveguide has become a preferred option for the optical combiner because of its thin thickness, light weight and good light transmittance.

The diffractive optical waveguide is usually composed of several diffractive waveguide layers, at least one protection layer, and adhesive for bonding the respective diffractive waveguide layers and the protection layer. An in-coupling grating and an out-coupling grating are arranged on the surface of each of the diffractive waveguide layers, and the in-coupling grating is used for coupling the light emitted by the light engine into the diffractive waveguide layer where the light undergoes total reflection. After the total reflection in the diffractive waveguide layer, the light is transmitted to the out-coupling grating, and the out-coupling grating diffracts the light in the diffractive waveguide layer into free space and the diffracted light forms a virtual image to be displayed on the retina after entering the human eye. In addition to the in-coupling grating and the out-coupling grating, the surface of each of the diffractive waveguide layers may be further provided with a turning grating to achieve requirements of exit pupil expansion or the like.

When the diffractive optical waveguide is assembled with the optical engine, there is inevitably a gap between the diffractive optical waveguide and the optical engine due to structural design and other reasons. If the AR optical display module is used directly without sealing the gap, impurities such as dust and water vapor will inevitably enter the gap during use or during reliability experiments. This will cause the light emitted by the light engine to be scattered by dust and water vapor, which will compromise the clarity of the virtual image display of the whole AR light display module. Even when dust accumulates excessively in the gap, the light emitted by the light engine will be blocked by the accumulated dust, and the luminous flux entering the diffractive optical waveguide will decrease, thereby leading to the decrease of the image brightness of the virtual image displayed by the AR display module. As can be seen, if the gap is not sealed, it will adversely affect the quality of the virtual image displayed by the AR display module.

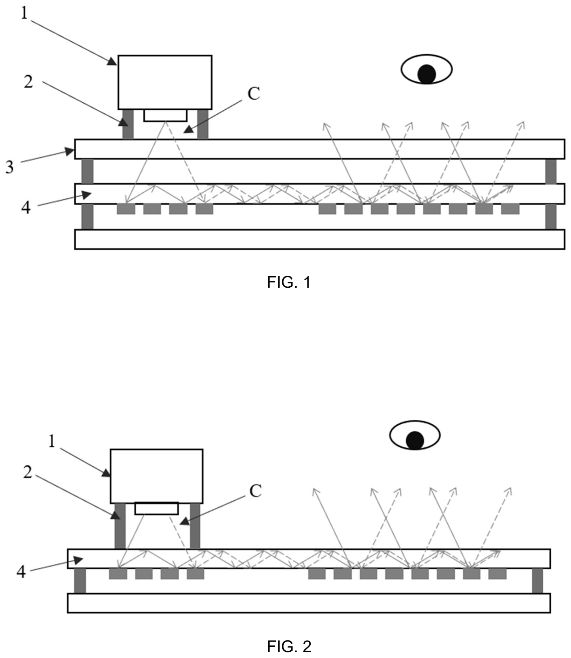

In order to seal the gap, in the prior art, a sealant is used to secure the optical engine to the diffractive optical waveguide and seal the gap C. As shown in FIG. 1, for the first case, a sealant 2 is fixed on an internal protection layer 3, and although this approach does not affect the total reflection propagation in a diffractive waveguide layer 4 and the gap C can be sealed, the thickness and weight of the diffractive optical waveguide are increased due to the existence of the internal protection layer 3. As shown in FIG. 2, for the second case, the sealant 2 is directly fixed on the diffractive waveguide layer 4. Although this approach reduces the thickness and weight of the diffractive optical waveguide, it disrupts the total reflection propagation of the diffractive waveguide layer 4 and reduces the performance indexes such as optical efficiency and contrast of the diffractive waveguide layer 4.

### Summary of the Invention

The technical problem to be solved by the present disclosure is how to ensure the light guide efficiency of the diffractive optical waveguide while reducing the thickness and weight of the diffractive optical waveguide when assembling and sealing the diffractive optical waveguide and the optical engine.

The present disclosure discloses an optical display module, the optical display module includes an optical engine, a diffractive waveguide layer, a sealing member and a reflecting film, the optical engine and the diffractive waveguide layer are opposite each other and have a gap therebetween, the sealing member is arranged between the optical engine and the diffractive waveguide layer and connected to both the optical engine and the diffractive waveguide layer, the reflecting film is arranged on the diffractive waveguide layer, and at least part of the reflecting film is located between the sealing member and a total-reflection propagation region of the diffractive waveguide layer, thus separating the sealing member from the total-reflection propagation region.

Optionally, the optical display module further includes a fixing member, the fixing member is connected with the optical engine, and the sealing member is connected with the fixing member.

Optionally, the reflecting film includes a single-layer or multi-layer reflecting layer.

Optionally, the reflecting film further includes a protection layer that is disposed on the reflecting layer.

Optionally, the optical display module further includes a transparent film layer, the transparent film layer is arranged on the surface of the diffractive waveguide layer that is close to the optical engine; the reflecting film is arranged on the outer surface of the transparent film layer that is close to the optical engine, or the reflecting film is arranged between the transparent film layer and the diffractive waveguide layer.

Optionally, the reflecting film has a plurality of reflecting regions, and the reflectivity of each of the reflecting regions is different.

Optionally, the sealing member is an adhesive.

Optionally, an in-coupling grating of the diffractive waveguide layer is a reflection grating, and the in-coupling grating is arranged on the surface of the diffractive waveguide layer that is far away from the optical engine.

Optionally, an in-coupling grating of the diffractive waveguide layer is a transmission grating, and the in-coupling grating is arranged on the surface of the diffractive waveguide layer that is close to the optical engine.

The present disclosure further provides a head-mounted device which includes the optical display module described above.

An optical display module and a head-mounted device provided according to the present disclosure have the following technical effects:

by providing the reflecting film on the diffractive waveguide layer, the sealing member is prevented from coming into direct contact with the total-reflection propagation region of the diffractive waveguide layer through the reflecting film, thereby ensuring light guide efficiency; moreover, providing an internal protection layer on the diffractive waveguide layer is unnecessary, thereby reducing the thickness and weight of the diffractive optical waveguide.

### Brief Description of the Drawings

FIG. 1 is a schematic view of the assembly of an optical engine and a diffractive optical waveguide in the prior art.
FIG. 2 is another schematic view of the assembly of an optical engine and a diffractive optical waveguide in the prior art.
FIG. 3 is a schematic view of an optical display module according to one or more embodiments.
FIG. 4 is a schematic view of an optical display module according to one or more embodiments.
FIG. 5A, FIG. 5B and FIG. 5C are top views of diffractive waveguide layers with reflecting films of different shapes according to one or more embodiments.
FIG. 6 is a top view of a diffractive waveguide layer with a turning grating according to one or more embodiments.
FIG. 7 is a schematic view illustrating the composition of a reflecting film according to one or more embodiments.
FIG. 8A and FIG. 8B are top views of a diffractive waveguide layer when a reflecting film has a plurality of reflecting regions according to one or more embodiments.
FIG. 9 is another schematic view illustrating the composition of a reflecting film according to one or more embodiments.
FIG. 10 is a schematic view illustrating the partial structure of an optical display module according to one or more embodiments.
FIG. 11 is a schematic view of an optical display module having two diffractive waveguide layers according to one or more embodiments.
FIG. 12 is a schematic view of an optical display module having two diffractive waveguide layers and an external protection layer according to one or more embodiments.
FIG. 13 is a schematic view of an optical display module according to one or more embodiments.

The corresponding relationships between reference numerals and component names are as follows:
10. Optical engine, 20. Diffractive waveguide layer, 21. In-coupling grating, 22. Out-coupling grating, 23. Turning grating, 30. Sealing member, 40. Reflecting film, 41. Reflecting layer, 42. Protection layer, 43. Adhesive layer, 50. Transparent film layer, 60. External protection layer, 70. Fixing member.

### Detailed Description of Embodiments

In order to make the objectives, technical solutions and advantages of the present disclosure clearer, the present disclosure will be further described in detail hereinafter with reference to the attached drawings and embodiments. It shall be appreciated that the specific embodiments described herein are used to explain the present disclosure and are not used to limit the present disclosure.

Before describing embodiments of the present disclosure in detail, the technical concept of the present disclosure will be briefly described first. In the prior art, when the diffractive optical waveguide and the optical engine are assembled and sealed, if the sealing member directly contacts the diffractive waveguide layer, then the total reflection propagation process in the diffractive waveguide layer will be disrupted, and the light guide efficiency will be reduced. If an internal protection layer is arranged outside the diffractive waveguide layer and the sealing member is connected to the internal protection layer, then the thickness and weight of the diffractive optical waveguide will be increased. Therefore, the present disclosure provides an optical display module in which a reflecting film is provided on the diffractive waveguide layer, and the sealing member is prevented from coming into direct contact with the total-reflection propagation region of the diffractive waveguide layer through the reflecting film, thereby ensuring light guide efficiency; moreover, providing an internal protection layer on the diffractive waveguide layer is unnecessary, thereby reducing the thickness and weight. In addition, it can also ensure that the comprehensive optical performance of the diffractive waveguide layer, including display uniformity, Modulation Transfer Function (MTF) and contrast, remains unaffected.

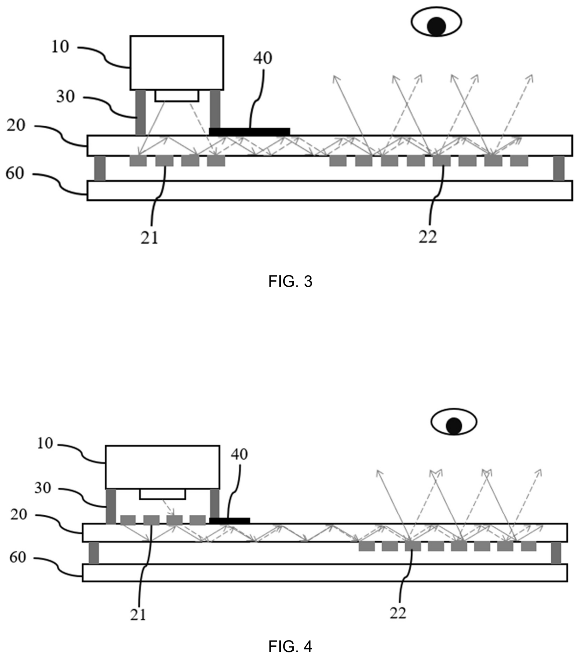

Specifically, as shown in FIG. 3, an optical display module according to the first embodiment includes an optical engine 10, a diffractive waveguide layer 20, a sealing member 30 and a reflecting film 40, in which the optical engine 10 and the diffractive waveguide layer 20 are opposite each other and have a gap therebetween, the sealing member 30 is arranged between the optical engine 10 and the diffractive waveguide layer 20 and connected to both the optical engine 10 and the diffractive waveguide layer 20, the reflecting film 40 is arranged on the diffractive waveguide layer 20, and at least part of the reflecting film 40 is located between the sealing member 30 and a total-reflection propagation region of the diffractive waveguide layer 20, thus separating the sealing member 30 from the total-reflection propagation region and preventing the sealing member 30 from disrupting the light guide process of the total-reflection propagation region.

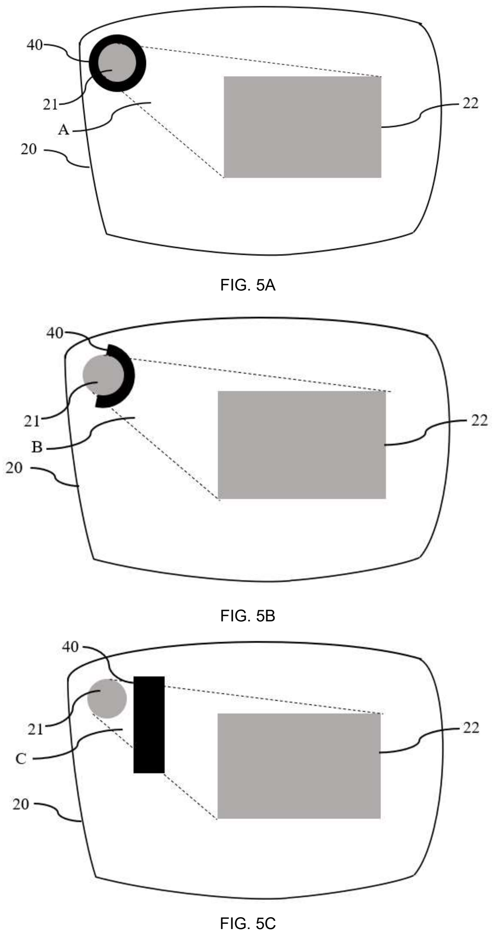

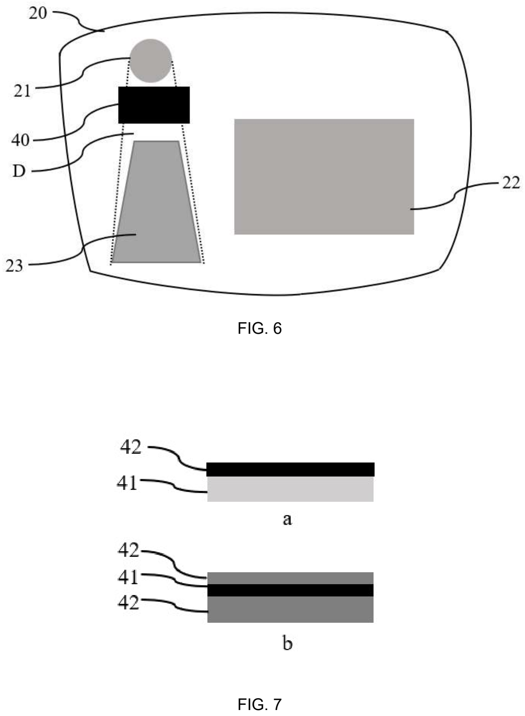

Illustratively, the total-reflection propagation region is the light transmission region between an in-coupling grating 21 and an out-coupling grating 22 of the diffractive waveguide layer 20, and the dotted line region A in FIG. 5A, the dotted line region B in FIG. 5B, and the dotted line region C in FIG. 5C can all represent the total-reflection propagation region. The reflecting film 40 may be wholly located in the total-reflection propagation region, or a part of the reflecting film 40 is located in the total-reflection propagation region. In other embodiments, if the surface of the diffractive waveguide layer 20 is further provided with a turning grating 23 in addition to the in-coupling grating 21 and the out-coupling grating 22, that is, a turning grating 23 is arranged between the in-coupling grating 21 and the out-coupling grating 22, then the total-reflection propagation region may be defined as the light transmission region between the in-coupling grating 21 and the turning grating 23. For example, the dotted line region D in FIG. 6 may represent the total-reflection propagation region. The light introduced through the in-coupling grating 21 propagates through the total-reflection propagation region and reaches the turning grating 23 in which the light is turned and guided to the out-coupling grating 22, and finally, the light is projected from the out-coupling grating 22 to the human eye.

Further speaking, at least part of the structure (partial structure or whole structure) of the sealing member 30 abuts against the reflecting film 40, and the sealing member 30 is separated from the diffractive waveguide layer 20 by the reflecting film 40, so that the sealing member 30 is not in direct contact with the total-reflection propagation region on the diffractive waveguide layer 20.

Furthermore, in order to ensure that the light from the optical engine 10 can irradiate into the in-coupling grating 21, the sealing member 30 needs to be arranged around the gap between the optical engine 10 and the diffractive waveguide layer 20 to prevent the sealing member 30 from blocking the light generated by the optical engine 10. At the same time, the in-coupling grating 21 is arranged opposite to the optical engine 10, and when the light emitted by the optical engine 10 undergoes total reflection propagation after being received by the in-coupling grating 21, the total-reflection propagation region will inevitably contact with the sealing member 30 directly. That is, at least part of the structure of the sealing member 30 will overlap with the total-reflection propagation region, and if no measures are taken, then the direct contact of the sealing member 30 will affect the light guide process of the total-reflection propagation region. Therefore, by arranging the reflecting film 40 between at least part of the structure of the sealing member 30 and the total-reflection propagation region, the direct contact between the sealing member 30 and the total-reflection propagation region is avoided, thereby ensuring the light guide efficiency and ensuring that the comprehensive optical performance of the diffractive waveguide layer, including display uniformity, MTF and contrast, remains unaffected. In essence, the total reflection at the contact between the reflecting film 40 and the total-reflection propagation region will also be affected, but the reflective function of the reflecting film 40 can return the light to the total-reflection propagation region, thus offsetting this impact.

Illustratively, the in-coupling grating 21 and the out-coupling grating 22 of the diffractive waveguide layer 20 are both reflective gratings. At this point, the in-coupling grating 21 and the out-coupling grating 22 are both arranged on the surface of the diffractive waveguide layer 20 far away from the optical engine 10, that is, the in-coupling grating 21 and the out-coupling grating 22 are both arranged on the inner surface of the diffractive waveguide layer 20. The reflective grating may be a reflective surface-relief grating or a reflective volume holographic grating. In other embodiments, as shown in FIG. 4, the in-coupling grating 21 of the diffractive waveguide layer 20 may be a transmission grating, and at this point, the in-coupling grating 21 is arranged on the surface of the diffractive waveguide layer 20 that is close to the optical engine 10, that is, the in-coupling grating 21 is arranged on the outer surface of the diffractive waveguide layer 20.

Furthermore, the position, shape and area of the reflecting film 40 may be set according to actual needs, and factors such as the position at which the sealing member is to be provided and the size of the sealing member need to be considered. For the light to smoothly enter into the in-coupling grating 21 and exit from the out-coupling grating 22, the reflecting film 40 needs to be prevented from blocking the in-coupling grating 21 and the out-coupling grating 22, and the reflecting film 40 may be arranged around or adjacent to the in-coupling grating 21. Illustratively, as shown in FIG. 5A, the reflecting film 40 has an annular shape and is arranged around the in-coupling grating 21. As shown in FIG. 5B, the reflecting film 40 has a semi-annular shape and is arranged around the in-coupling grating 21. As shown in FIG. 5C, the reflecting film 40 has a rectangular shape and is arranged near the in-coupling grating 21.

Specifically, as shown in a and b in FIG. 7, the reflecting film 40 includes a single-layer or multi-layer reflecting layer 41. The reflecting layer 41 may be a metal reflecting layer, a dielectric reflecting layer, or a combination of a metal reflecting layer and a dielectric reflecting layer. The reflectivity of the reflecting layer 41 for the visible light band may be set as required. In one or more embodiments, the reflectivity of the reflecting layer 41 for the visible light band is greater than 95%.

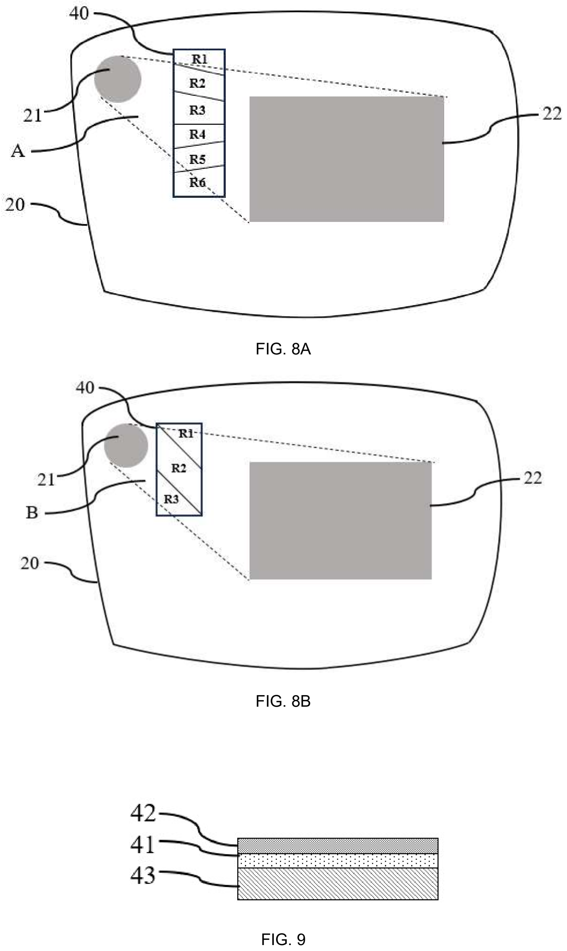

In another embodiment, the reflecting film 40 has a plurality of reflecting regions, and the reflectivity of each of the reflecting regions is different, so as to further improve the display uniformity of the diffractive optical waveguide. In the diffractive waveguide layer, the energy loss of light is different on different light transmission paths, so the intensity of light finally emitted from the out-coupling grating is uneven, that is, the intensity of light emitted from some out-coupling areas is smaller than that from other areas. At least part of the reflecting film 40 is located on the light transmission path of the diffractive waveguide layer, so the light intensity can be adjusted by providing various reflecting regions with different reflectivity on the reflecting film 40. For example, a reflecting region with smaller reflectivity may be provided on a shorter light transmission path and a reflecting region with larger reflectivity may be provided on a longer light transmission path. Illustratively, as shown in FIG. 8A, the reflecting film 40 has six reflecting regions R1, R2, R3, R4, R5 and R6 with different reflectivity. As shown in FIG. 8B, the reflecting film 40 has three reflecting regions R1, R2 and R3 with different reflectivity. It should be pointed out that the number, shape and reflectivity of the reflecting regions on the reflecting film 40 are all set to meet the requirement of improving the display uniformity of the diffractive optical waveguide, and no particular limitation is made in this embodiment.

Further speaking, as shown in a and b in FIG. 7, the reflecting film 40 further includes a protection layer 42, and the protection layer 42 is disposed on the reflecting layer 41. One or both sides of the reflecting layer 41 may be provided with a protection layer 42 to avoid the corrosion of external air and the influence of outgassing of the diffractive waveguide layer 20 (outgassing means that when the waveguide substrate is made of resin material, the water vapor absorbed in the resin will be slowly released over time. Without the protection layer, the water vapor may corrode the reflecting layer, thus reducing the use performance or reliability of the reflecting layer). The number of the protection layers 42 may be set according to actual needs.

Illustratively, the reflecting film 40 may be prepared by physical vapor deposition (PVD), chemical vapor deposition (CVD), spraying, dip coating, printing, film attachment or the like. Next, the preparation process of the reflecting film 40 will be described by taking the film attachment process as an example.

Specifically, as shown in FIG. 9, the reflecting film 40 is composed of a reflecting layer 41, an adhesive layer 43 and a protection layer 42. The reflecting layer 41 and the protection layer 42 are prefabricated sheet-shaped materials, and then the prefabricated sheet-shaped reflecting layer 41 and the protection layer 42 are cut into preset shapes according to requirements, and then attached to the diffractive waveguide layer 20 through the adhesive layer 43. Illustratively, the adhesive layer 43 is made of a transparent adhesive, preferably a transparent sheet-shaped OCA (or OCR adhesive). The reflecting layer 41 and the protection layer 42 may be a complete sheet in the prefabrication process, and at this point, the reflecting layer 41 and the protection layer 42 have been bonded together in the prefabrication. In the prefabrication process, the reflecting layer 41 and the protection layer 42 may also be prefabricated into separate sheets. During the preparation of the diffractive optical waveguide, the reflecting layer 41 is first connected with the diffractive waveguide layer 20 through the adhesive layer 43, and then the protection layer 42 is connected with the reflecting layer 41 (at this point, an adhesive layer 43 needs to be arranged between the protection layer 42 and the reflecting layer 41).

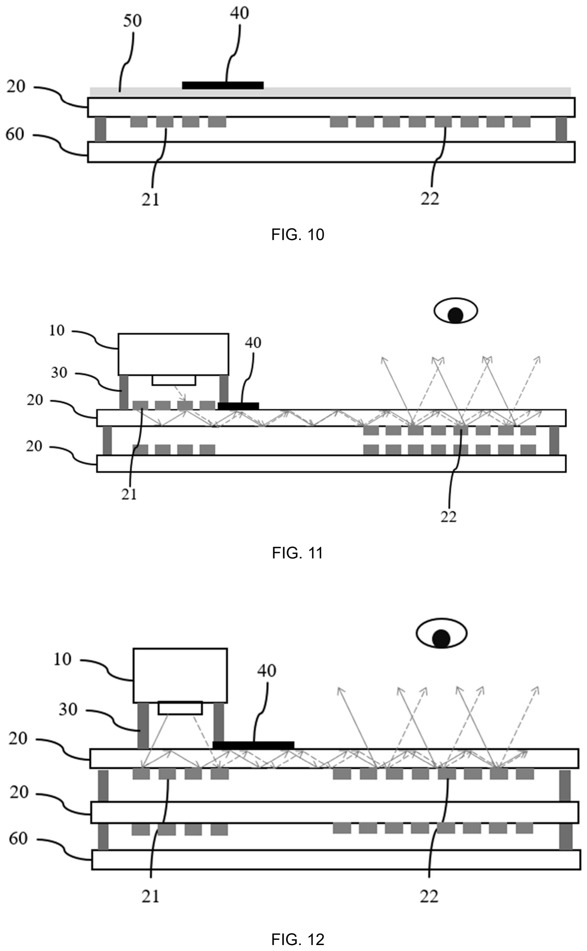

Further speaking, the optical display module further includes a transparent film layer 50, and the transparent film layer 50 is arranged on the surface of the diffractive waveguide layer 20 that is close to the optical engine 10. As shown in FIG. 10, the reflecting film 40 is arranged on the outer surface of the transparent film layer 50 that is close to the optical engine 10. In another embodiment, the reflecting film 40 is arranged between the transparent film layer 50 and the diffractive waveguide layer 20, that is, the reflecting film 40 is arranged on the inner surface of the transparent film layer 50 that is far away from the optical engine 10. Optionally, the transparent film layer 50 includes at least one of a hardening layer, an anti-reflection layer and an anti-fingerprint layer. When the transparent film layer 50 includes at least two of the hardening layer, the anti-reflection layer and the anti-fingerprint layer, the reflecting film 40 may also be arranged between the two different layers of the transparent film layer 50, for example, between the hardening layer and the anti-reflection layer.

Furthermore, the optical display module further includes an external protection layer 60, which is arranged on the side of the diffractive waveguide layer 20 far away from the optical engine 10, and the external protection layer 60 is arranged at a distance from the diffractive waveguide layer 20 with an air layer formed therebetween, so that the total reflection propagation of the diffractive waveguide layer 20 can be ensured and the diffractive waveguide layer 20 can be protected.

As shown in FIG. 11, in one embodiment, the number of the diffractive waveguide layers 20 may be two, and the diffractive waveguide layers 20 are arranged at intervals with an air layer formed therebetween. In FIG. 11, both the in-coupling grating 21 and the out-coupling grating 22 of the outermost diffractive waveguide layer 20 are transmission gratings and arranged on the inner surface of the diffractive waveguide layer 20, and the in-coupling grating 21 and the out-coupling grating 22 are not exposed to the external environment, so it is unnecessary to provide an external protection layer 60 on the outer side of the diffractive waveguide layer 20. As shown in FIG. 12, in another embodiment, when the number of the diffractive waveguide layers 20 is two, both the in-coupling grating 21 and the out-coupling grating 22 of the outermost diffractive waveguide layer 20 are reflective gratings and arranged on the outer surface of the diffractive waveguide layer 20. In this case, the in-coupling grating 21 and the out-coupling grating 22 are exposed to the external environment, so an external protection layer 60 may be provided on the outer side of the outermost diffractive waveguide layer 20. That is, the first diffractive waveguide layer 20, the second diffractive waveguide layer 20 and the external protection layer 60 are sequentially arranged at intervals from the inside to the outside to protect the in-coupling grating 21 and the out-coupling grating 22 on the outermost diffractive waveguide layer 20. The inner surface described herein refers to the surface of the diffractive waveguide layer 20 facing the optical engine 10, and the outer surface refers to the surface of the diffractive waveguide layer 20 facing away from the optical engine 10, and the outer side described herein refers to the side of the diffractive waveguide layer 20 facing away from the optical engine 10. In other embodiments, the number of the diffractive waveguide layers 20 may be three or more, and the specific number may be set according to actual needs. To sum up, for scenarios where there are a plurality of diffractive waveguide layers 20, when the outer surface of the outermost diffractive waveguide layer 20 is provided with at least one grating of the in-coupling grating 21, the out-coupling grating 22 and the turning grating, it is necessary to provide an external protection layer on the outer side of the outermost diffractive waveguide layer 20 to protect the grating.

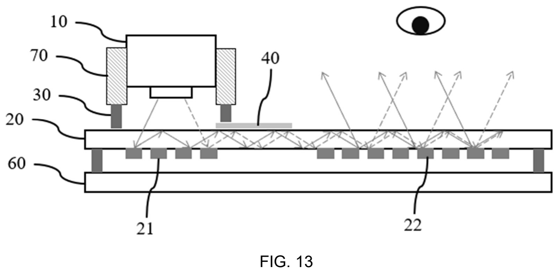

As shown in FIG. 13, in another embodiment, the optical display module further includes a fixing member 70, and the fixing member 70 is connected to the optical engine 10, and the sealing member 30 is connected to the fixing member 70. Illustratively, the fixing member 70 is a cylinder, and the fixing member 70 is arranged at the periphery of the optical engine 10.

In one or more embodiments, the sealing member 30 is an adhesive. During assembly, firstly, adhesive is coated around the in-coupling grating 21 of the diffractive waveguide layer 20, in which the reflecting film 40 has been formed in advance in the diffractive waveguide layer 20, and the adhesive is partially coated on the reflecting film 40. Then, the optical engine 10 or the fixing member 70 is adhered to the adhesive, so that the gap between the optical engine 10 and the diffractive waveguide layer 20 can be sealed and the optical engine 10 can be fixed. In other embodiments, during the coating of the adhesive, the adhesive may also be coated onto the corresponding position of the optical engine 10 or the fixing member 70, so that the optical engine 10 or the fixing member 70 can be adhered to the diffractive waveguide layer 20 and the reflecting film 40.

For the optical display module disclosed in the first embodiment, by means of the reflecting film, the sealing member is prevented from coming into direct contact with the total-reflection propagation region of the diffractive waveguide layer, thereby ensuring light guide efficiency; moreover, providing an internal protection layer on the diffractive waveguide layer is unnecessary, enabling the thickness and weight to be reduced.

A second embodiment further discloses a head-mounted device, which includes the optical display module in the first embodiment. The head-mounted device can reduce the weight of the device on the basis of ensuring the light guide efficiency, which is beneficial to miniaturization design.

The head-mounted device may be an augmented reality device, such as augmented reality glasses. In an example of augmented reality glasses, the head-mounted device may be configured to transfer data to and receive data from an external processing device through a signal connection, which may be a wired connection, a wireless connection, or a combination thereof. However, in other cases, the head-mounted device may be used as a stand-alone device, that is, data processing is performed by the head-mounted device itself. The signal connection may be configured to carry any kind of data, such as image data (e.g., still images and/or full-motion video, including 2D and 3D images), audio, multimedia, voice and/or any other type of data. The external processing device may be, for example, a game console, a personal computer, a tablet computer, a smart phone or other types of processing devices. The signal connection may be, for example, a universal serial bus (USB) connection, a Wi-Fi connection, a Bluetooth or Bluetooth Low Energy (BLE) connection, an Ethernet connection, a cable connection, a DSL connection, a cellular connection (for example, 3G, LTE/4G or 5G) or a combination thereof. Additionally, the external processing device may communicate with one or more other external processing devices via a network, which may be or include, for example, a local area network (LAN), a wide area network (WAN), an intranet, a metropolitan area network (MAN), the global Internet, or a combination thereof.

It should be noted that, as shall be appreciated, complete augmented reality glasses should also comprise other necessary basic components, but these other components are not the focus of this embodiment and thus are not shown in the drawings and not described in detail in the specification, and these components are well known to those skilled in the art.

The specific embodiments of the present disclosure have been described in detail above. Although some embodiments have been shown and described, those skilled in the art should understand that these embodiments can be modified and improved without departing from the principle and spirit of the present disclosure, the scope of which is defined by the claims and equivalents thereof, and these modifications and improvements should also fall within the scope claimed in the present disclosure.

## Claims

1. An optical display module, wherein the optical display module comprises an optical engine, a diffractive waveguide layer, a sealing member and a reflecting film, the optical engine and the diffractive waveguide layer are opposite each other and have a gap therebetween, the sealing member is arranged between the optical engine and the diffractive waveguide layer and connected to both the optical engine and the diffractive waveguide layer, the reflecting film is arranged on the diffractive waveguide layer, and at least part of the reflecting film is located between the sealing member and a total-reflection propagation region of the diffractive waveguide layer, thus separating the sealing member from the total-reflection propagation region.

2. The optical display module according to Claim 1, wherein the optical display module further comprises a fixing member, the fixing member is connected with the optical engine, and the sealing member is connected with the fixing member.

3. The optical display module according to Claim 1, wherein the reflecting film comprises a single-layer or multi-layer reflecting layer.

4. The optical display module according to Claim 3, wherein the reflecting film further comprises a protection layer that is disposed on the reflecting layer.

5. The optical display module according to Claim 3, wherein the optical display module further comprises a transparent film layer, the transparent film layer is arranged on the surface of the diffractive waveguide layer that is close to the optical engine; the reflecting film is arranged on the outer surface of the transparent film layer that is close to the optical engine, or the reflecting film is arranged between the transparent film layer and the diffractive waveguide layer.

6. The optical display module according to Claim 1, wherein the reflecting film has a plurality of reflecting regions, and the reflectivity of each of the reflecting regions is different.

7. The optical display module according to Claim 1, wherein the sealing member is an adhesive.

8. The optical display module according to Claim 1, wherein an in-coupling grating of the diffractive waveguide layer is a reflection grating, and the in-coupling grating is arranged on the surface of the diffractive waveguide layer that is far away from the optical engine.

9. The optical display module according to Claim 1, wherein an in-coupling grating of the diffractive waveguide layer is a transmission grating, and the in-coupling grating is arranged on the surface of the diffractive waveguide layer that is close to the optical engine.

10. A head-mounted device, wherein the head-mounted device comprises the optical display module according to any of Claims 1 to 9.
